Europäisches Patentamt

(19) European Patent Office

Office européen des brevets

(11) Numéro de publication : **0 295 979 B1**

(12) **FASCICULE DE BREVET EUROPEEN**

(45) Date de publication du fascicule du brevet :
25.09.91 Bulletin 91/39

(51) Int. Cl.⁵ : **G11B 5/596, G11B 11/10**

(21) Numéro de dépôt : 88401247.7

(22) Date de dépôt : 20.05.88

(54) **Mode d'écriture d'information sur un support d'enregistrement magnétique.**

(30) Priorité : 27.05.87 FR 8707514

(43) Date de publication de la demande :
21.12.88 Bulletin 88/51

(45) Mention de la délivrance du brevet :
25.09.91 Bulletin 91/39

(84) Etats contractants désignés :
DE FR GB IT NL

(56) Documents cités :
EP-A- 0 050 695
WO-A-83/01858
US-A- 4 530 019
PATENT ABSTRACTS OF JAPAN, vol. 11, no.
66 (P-552)[2513], 27 frévier 1987, page 138 P
552; & JP-A-61 229 278 (NEC CORP.) 13-
10-1986
PATENT ABSTRACTS OF JAPAN, vol. 10, no.
147 (P-460)[2204], 29 mai 1986, page 19 P 460;
& JP-A-60 263 346 (CANON K.K.) 26-12-1985
PATENT ABSTRACTS OF JAPAN, vol. 7, no. 15
(P-169)[1160], 21 janvier 1983, page 85 P 169; &
JP-A-57 169 947 (SHARP K.K.) 19-10-1982

(56) Documents cités :
COMPUTER TECHNOLOGY REVIEW, vol. 3,
no. 1, janvier 1983, pages 241-243, Los Angeles, CA, US; D. SUTTON: "Removable cartridges require designs that ensure reliability"
PATENT ABSTRACTS OF JAPAN, vol. 10, no.
160 (P-465)[2216], 7 juin 1986, page 136 P 465;
& JP-A-61 13 457 (HITACHI SEISAKUSHO K.K.)
21-01-1986
JAPANESE JOURNAL OF APPLIED PHYSICS,
vol. 21, no. 8, partie 2, août 1982, pages
L509-L511, Tokyo, JP; Y. NAGAO et al.:
"Dynamic recording and readout characteristics of GdTbFe using a modified magnetooptical disk exerciser"

(73) Titulaire : BULL S.A.
121 avenue de Malakoff P.B. 193.16
F-75764 Paris Cédex 16 (FR)

(72) Inventeur : Maury, Christian
10, rue Farman
F-78960 Voisins le Bretoneux (FR)

(74) Mandataire : Gouesmel, Daniel et al
BULL S.A. Industrial Property Department
P.C.: HQ 8M006 B.P. 193.16 121 avenue de
Malakoff
F-75764 Paris Cédex 16 (FR)

## Description

La présente invention concerne un mode d'écriture d'informations sur un support d'enregistrement magnétique. Elle est plus particulièrement applicable aux mémoires à disques magnétooptiques.

Dans les systèmes de traitement de l'information, l'évolution technologique est telle que l'on tend à utiliser les mémoires à disques magnétooptiques en raison du grand nombre d'informations qu'elles peuvent contenir par unité de surface. Ce sont des mémoires où les informations sont enregistrées sur des disques magnétiques (par exemple au moyen de transducteurs magnétiques) et lues par des dispositifs opto-électroniques.

Leur mode de fonctionnement repose sur l'effet magnétooptique qui concerne l'interaction d'une lumière polarisée rectiligne avec l'état magnétique du matériau constituant la couche d'enregistrement des disques magnétiques. La lecture des informations est effectuée par un dispositif opto-électronique comprenant un dispositif optique de focalisation plus ou moins complexe associé à des transducteurs photo-électroniques et des circuits d'amplification des signaux délivrés par ces transducteurs. Ces dispositifs opto-électroniques permettent d'observer à un moment donné, en un endroit donné, une face d'un disque au moyen d'un faisceau de lumière polarisée et de délivrer un signal électrique dont la tension (ou le courant) est fonction de la valeur des informations situées à cet endroit. De plus amples détails sur l'effet magnétooptique et sur la manière dont peuvent être lues les informations contenues sur des disques magnétiques d'une mémoire magnétooptique, sont donnés dans le brevet français 2514913 déposé par la Compagnie Internationale pour l'Informatique CII HONEYWELL BULL le 16 octobre 1981.

On sait que les disques magnétiques portent ces informations sous forme codée binaire sur des pistes d'enregistrement concentriques circulaires dont la largeur est de l'ordre de quelques micromètres et qui sont disposées sur leurs deux faces.

Chaque piste est repérée par un numéro d'ordre $j$, $j$ étant un nombre entier variant de zéro à $N-1$, $N$ étant le nombre total des pistes d'enregistrement. Ce nombre de pistes est de l'ordre de plusieurs milliers. On appelle adresse l'expression codée du numéro d'ordre $j$ d'une piste. Dans ce cas, l'adresse est dite "adresse absolue".

Les disques magnétiques ont une vitesse de rotation constante.

Dans la pratique des mémoires à disques classiques (où les informations sont écrites et lues par un même transducteur magnétique) et plus spécialement dans le cas des mémoires qui ne comportent qu'un nombre limité de disque (généralement inférieur à 4 ou 5), les informations sont enregistrées sur chacune des faces des disques de la manière décrite dans le brevet français 2439435 déposé le 19 octobre 1978. Un maximum de place est réservé à l'enregistrement des données (data selon la terminologie anglo-saxone) destinées à être traitée par le système de traitement de l'information auquel ces mémoires appartiennent.

Un minimum de place est réservé d'une part à l'enregistrement des adresses des pistes et d'autre part à l'enregistrement d'informations nécessaires à l'asservissement de position au-dessus des pistes du transducteur magnétique associé à cette face, ces informations étant encore appelées "information de position fine".

Dans la pratique courante, ainsi qu'il est décrit dans le brevet mentionné ci-dessus, les informations contenues sur chaque face du disque sont de préférence réparties sur des secteurs circulaires égaux et adjacents $S_0$, $S_1$, ..., $S_i$, ..., $S_n$. Habituellement, une face du disque est divisée en plusieurs dizaines de secteurs (de l'ordre par exemple de 80 à 90 secteurs).

Lorsqu'un secteur $S_i$ (ou plus généralement un premier groupe d'informations) est lu ou écrit avant un secteur $S_{i+1}$ (ou plus généralement un second groupe d'informations), on dit que le secteur $S_i$ précède le secteur $S_{i+1}$.

Chaque secteur $S_i$ est lui-même divisé en deux aires inégales. L'aire la plus grande comprend les données destinées à être traitées par le système de traitement de l'information auquel appartient la mémoire à disques tandis que l'aire la plus petite comprend les adresses des pistes et les informations de position fine. Pour chaque secteur, l'aire la plus petite est divisée en plusieurs zones appelées zones de référence. Chaque piste est associée à au moins une zone ayant même numéro d'ordre $j$ que celle-ci.

Une zone de blanc ne contenant aucune information est disposée entre l'aire la plus grande et l'aire la plus petite. Elle précède les zones de référence.

On sait que, pour enregistrer une suite d'informations sur un disque magnétique on crée sur chaque piste de celui-ci une successsion de petits domaines magnétiques adjacents de longueur variable réparties sur toute la longueur de la piste et ayant alternativement des aimantations de même module et de sens opposé. La frontière géographique entre deux domaines magnétiques adjacents est appelée transition magnétique.

Ainsi qu'il est décrit dans le brevet français 2439435, les zones de référence ont même largeur que les pistes, chaque zone étant décalée d'une distance égale à la largeur d'une demi-piste, par rapport à la piste de numéro d'ordre $j$ à laquelle elle est associée. De ce fait, la frontière entre deux zones de référence voisines de numéros d'ordre $j$ et $j+1$ est confondue avec le milieu de la piste de numéro d'ordre $j$.

Par ailleurs, chaque zone de référence comprend trois parties, à savoir, une première partie dite de préambule précédant une seconde partie contenant des informations d'adresse, elle-même précédant une troisième partie comprenant des informations de position fine. La partie préambule contient des informations dont l'exploitation par les circuits de lecture de la mémoire à disque permet de déterminer le gain des amplificateurs de ces circuits de telle sorte que la précision de lecture des adresses et des informations de position fine soit la plus grande possible. Ces informations de préambule peuvent également servir d'informations de synchronisation permettant de déterminer le début de chaque zone de référence.

Les informations d'adresse sont écrites suivant le code Gray, c'est-à-dire que deux adresses successives écrites dans deux zones de référence voisines associées à des pistes de numéro d'ordre j et (j + 1) ne diffèrent que par un seul bit. De préférence, les trois parties décrites ci-dessus ont même longueur et comprennent le même nombre de cellules, chaque information étant constituée par la présence ou l'absence d'une double transition magnétique.

Le mode d'écriture brièvement rappelé ci-dessus utilisé dans les mémoires à disques classiques est transposable et applicable aux mémoires à disques magnétooptiques à condition de surmonter les inconvénients suivants :

— lorsque le transducteur de lecture lit les données enregistrées sur une piste déterminée, en étant parfaitement centré sur la piste, il lit les informations contenues dans les zones de référence en étant à cheval sur celles-ci, c'est-à-dire en lisant simultanément les informations contenues sur chacune de ces zones. Puisque les adresses sont écrites en code Gray, les informations d'adresses lues par le transducteur de lecture seront toutes parfaitement déterminées à l'exception d'un seul bit, appelé bit incertain, puisque deux adresses voisines diffèrent par ce bit. Il faut donc en permanence déterminer la valeur de ce bit incertain avec un circuit électronique supplémentaire, ce qui donne une relative complexité au circuit électronique de lecture.

— Les informations de position fine étant relativement nombreuses, les circuits électroniques associés permettant de déterminer si le transducteur d'écriture ou de lecture est parfaitement centré sur la piste qu'il est train d'écrire ou de lire, sont relativement compliquées.

— La partie contenant des informations de préambule est mal adaptée à son utilisation dans les mémoires à disques magnétooptiques. En effet, les disques utilisés dans ces mémoires présentent un taux d'erreurs de l'ordre de $10^{-5}$ (une erreur sur $10^5$ informations écrites) considéré comme relativement élevé. La première partie contenant les informations de préambule servant simultanément d'une part à contrôler le gain des amplificateurs des circuits de lecture et d'autre part, à déterminer le début de la zone, n'offre pas de garanties suffisantes pour une détection précise de la zone de référence, en égard au taux d'erreurs indiqué ci-dessus.

Le mode d'écriture d'informations dans une zone de référence selon l'invention est particulièrement bien adapté pour la lecture et l'écriture des informations de position fine et d'adresse dans les zones de référence des disques utilisés dans les mémoires magnétooptiques, en remédiant aux inconvénients mentionnés ci-dessus. Par ailleurs, il permet la lecture des informations (non seulement celles des zones de référence, mais aussi les données) avec un seul faisceau lumineux contrairement à ce qui est pratiqué fréquemment dans les mémoires magnétooptiques où les informations sont lues au moyen de trois faisceaux lumineux : dans ce cas, le faisceau central permet la lecture des données et les deux faisceaux latéraux servent à déterminer la position soit du dispositif d'écriture, soit du dispositif de lecture en regard des pistes du disque. On trouvera une telle description de l'utilisation de trois faisceaux pour la lecture des informations d'un disque d'une mémoire magnétooptique dans la publication de NOBUTAKE IAMAMURA et CHUICHI OTA, intitulée "Experimental Study on Magnetooptical Disc Exerciser with the Laser diod and amorphous magnetic scene films" publiée dans la revue "Japanese Journal of Applied Physics" volume 19, N° 12, décembre 1980.

Selon l'invention, le mode d'écriture sur un support d'enregistrement magnétique, où les informations sont écrites en code binaire et sont réparties sur une pluralité N de pistes, chaque piste étant associée à au moins une zone de référence précédée d'une zone de blanc, qui comprend au moins un groupe d'informations de préambule, un groupe comprenant des informations d'adresse absolue et un groupe contenant des informations de position fine, est caractérisé en ce que, la zone de référence comprend une première partie constituée des groupes d'informations de préambule et d'informations d'adresse absolue et une seconde partie constituée du groupe d'informations de position fine, la première partie étant disposée et centrée sur la piste de numéro d'ordre j alors que la seconde partie est décalée par rapport à l'axe de symétrie de cette même piste, d'un même côté que celui-ci, de telle sorte que la frontière entre deux secondes parties appartenant à deux zones de référence voisines est confondue avec le milieu de la piste de numéro d'ordre j.

Dans un mode de réalisation préféré de l'invention, la seconde partie est composée de deux domaines magnétiques adjacents de magnétisation opposée, les domaines magnétiques correspondants de deux secondes parties appartenant à deux zones de référence voisines étant également de magnétisation opposée.

Dans un autre mode préféré de réalisation de l'invention, le groupe d'informations de préambule comprend un premier sous groupe d'informations de synchronisation, suivi d'un second sous groupe d'informations de contrôle automatique de gain.

La présente invention ressortira plus clairement de la description qui suit, faite à titre d'exemple en se référant aux dessins annexés.

Sur ces dessins :

— La figure 1 : composée des figures 1a, 1b, 1c montre un exemple préféré de répartition d'informations sur un disque magnétique, selon l'art antérieur telle que décrit dans le brevet 2439435 précité, la figure 1c étant une vue aggrandie d'une partie de la figure 1a, la figure 1b montrant plus en détail une portion du disque,

— La figure 2 : montre un ensemble de trois zones de référence où les informations sont écrites selon le mode d'écriture de l'invention,

— La figure 3 : montre un exemple préféré de mode d'écriture de la seconde partie des zones de référence contenant les informations de position fine, selon l'invention.

— La figure 4 : montre la courbe de variation du signal de lecture obtenu lorsque le spot lumineux produit par le senseur optique de lecture se déplace en regard des informations de position fine de deux zones de référence voisines.

— La figure 5 et la figure 6 : permettent de mieux comprendre comment les informations de position fine des zones de référence sont lues par un dispositif de lecture optique utilisant un mode de lecture différentiel et quels sont les avantages du mode d'écriture des informations de position fine des zones de référence.

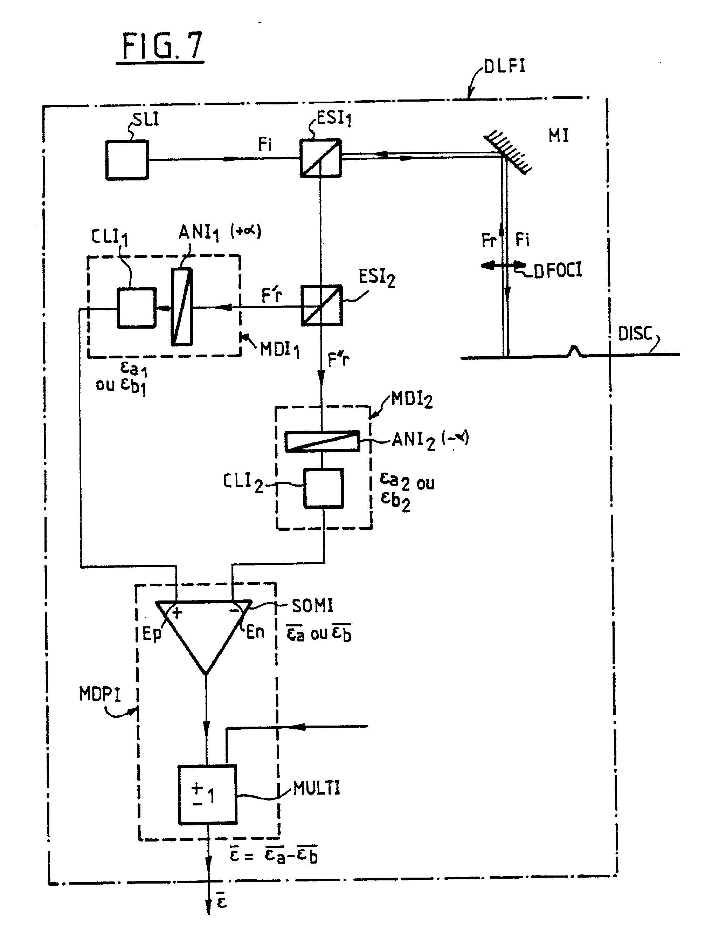

— La figure 7 : montre un exemple préféré de réalisation d'un circuit de lecture optique des informations de position fine des zones de référence.

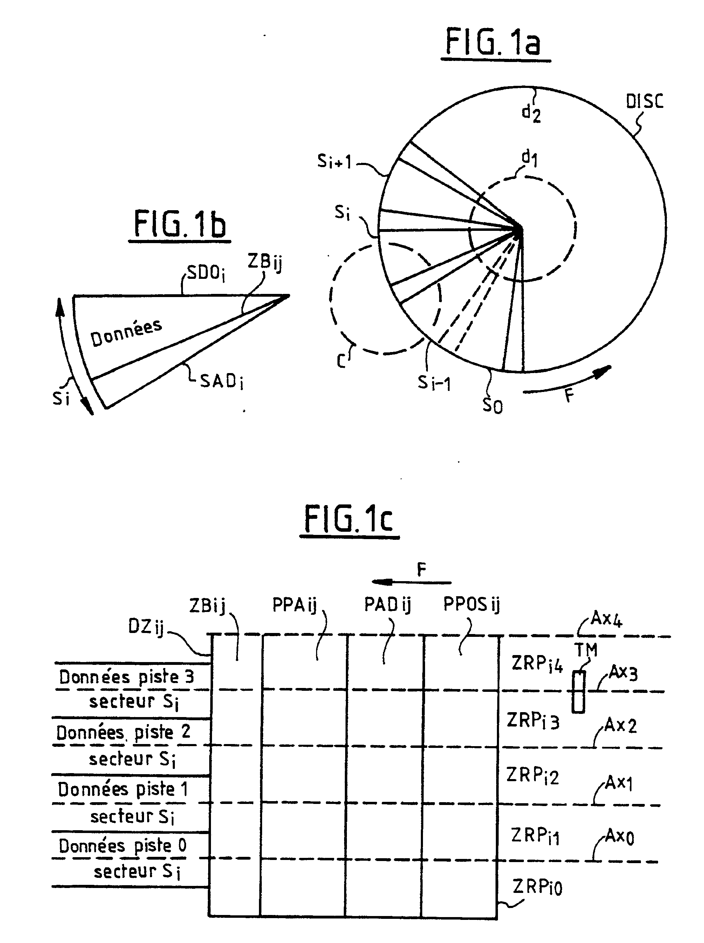

Afin de mieux comprendre comment sont écrites les informations de zones de référence d'un support d'enregistrement selon l'invention, il est nécessaire d'effectuer quelques rappels illustrés par les figures 1a, 1b, 1c montrant d'une part comment sont réparties les informations sur la surface d'un support d'enregistrement magnétique tel qu'un disque magnétique, selon l'art antérieur (figure 1a et figure 1b) et d'autre part quelques rappels illustrés par la figure 1c montrant comment sont réparties les informations à l'intérieur des zones de référence, selon ce même art antérieur.

Aux figures 1a à 1c, on suppose qu'on écrit des informations dans les zones de référence d'un disque magnétique DISC.

A la figure 1a, ce disque DISC tourne dans le sens de la flèche F. Sa surface utile d'enregistrement est délimitée par les cercles $d_1$, $d_2$. On définit sur le disque DISC p secteurs circulaires égaux et adjacents $S_0$, $S_1$, ..., $S_i$, ..., $S_p$. Ainsi qu'on peut mieux le voir à la figure 1b, chaque secteur $S_i$ est divisé en deux parties $SDO_i$, $SAD_i$ où sont respectivement enregistrées, d'une part, les données à traiter et d'autre part les informations d'adresse et de position fine. La surface de la partie $SAD_i$ est très inférieure à la surface de la partie $SDO_i$ (quelques pour cent).

Chaque partie $SAD_i$ d'un secteur déterminé $S_i$ est divisé en $N' = (N + 1)$ zones de référence $ZRP_{i0}$, ..., $ZRP_{ij}$, ... $ZRP_{i(N)}$, N étant le nombre total de pistes d'enregistrement du disque DISC. Pour simplifier, on n'a représenté que les zones de référence $ZRP_{i0}$ à $ZRP_{i4}$ aux figures 1b et 1c, ces zones étant symbolisées par des rectangles à la figure 1c.

Les frontières entre les différentes zones de référence $ZRP_{ij}$ sont confondues avec les cercles $Ax_j$ définissant le milieu d'une piste d'enregistrement du disque magnétique DISC. On voit que dans chaque secteur $S_i$, à la piste de numéro d'ordre j, sont associées les zones de référence $ZRP_{ij}$ et $ZRP_{i(j+1)}$. Ainsi, à la piste de numéro d'ordre zéro, sont associées les deux zones de référence $ZRP_{i0}$ et $ZRP_{i1}$, à la piste de numéro d'ordre 1 sont associées les zones de référence $ZRP_{i1}$, $ZRP_{i2}$ et ainsi de suite.

La figure 1c montre de manière plus précise la nature des informations contenues dans chaque de référence $ZRP_{ij}$, et comment ces informations sont réparties à l'intérieur de la zone (selon le brevet 2439435 précité).

Ainsi qu'il est indiqué plus haut, la zone de référence $ZRP_{ij}$ est précédée d'une zone dite zone de blanc $ZB_{ij}$ où l'aimantation est uniforme (généralement nulle), ce qui permet de détecter de manière plus aisée le début de la zone $DZ_{ij}$ qui est indiqué le plus souvent par une transition magnétique spéciale.

La zone de référence $ZRP_{ij}$ comprend trois parties comportant chacune un nombre identique d'informations binaires (par exemple une dizaine) contenues chacune dans une cellule d'informations. La première partie appelée $PPA_{ij}$ comprend les informations de préambule (définies plus haut).

Les deux autres parties sont les parties $PAD_{ij}$ et $PPOS_{ij}$. La partie $PAD_{ij}$ comprend un certain nombre d'informations définissant l'adresse absolue de la piste (ce nombre est bien entendu fonction du nombre total de pistes contenues sur le disque). La partie $PPOS_{ij}$ comprend un certain nombre d'informations de position fine permettant de maintenir le transducteur de lecture associé au disque DISC parfaitement centré au-dessus de la piste de numéro d'ordre j, en regard de laquelle il se trouve. Ceci permet une plus grande précision de

EP 0 295 979 B1

lecture des données par le transducteur.

Chaque information binaire peut être constituée soit par une simple transition magnétique, soit par une double transition magnétique.

Le mode d'écriture des informations à l'intérieur des zones de référence selon l'invention permet d'éviter les inconvénients mentionnés plus haut et est particulièrement bien adapté pour être utilisé dans les disques des mémoires magnétooptiques, appelés disques magnétooptiques pour simplifier. On suppose donc par la suite que le disque DISC est magnétooptique.

A l'intérieur de chaque zone de référence $ZRP_{ij}$, chaque information binaire est constituée par un domaine magnétique d'aimantation soit positive soit négative. La valeur de chaque information est fonction du signe de l'aimantation dans chaque domaine (qui constitue donc une cellule contenant une information). Ainsi, par exemple, à un domaine d'aimantation positive, correspond une information binaire égale au 1 logique, alors qu'à une aimantation négative correspond une information binaire égale au 0 logique.

Ainsi, on voit donc que les informations binaires ne sont plus constituées par des transitions magnétiques mais sont constituées directement par le signe de l'aimantation à l'intérieur de chaque domaine magnétique élémentaire.

Chaque zone de référence $ZRP_{ij}$ comprend :

● une première partie, encore appelée premier groupe d'informations $GCP_{ij}$ contenant une pluralité de domaines magnétiques ayant sensiblement même largeur que la piste de données de numéro d'ordre j, et ayant même milieu. En d'autres termes, le cercle qui constitue le milieu de la piste de numéro d'ordre j est confondu avec le cercle qui constitue le milieu de la première partie de la zone de référence $GCP_{ij}$. On dit également que cette première partie de la zone de référence $ZRP_{ij}$ est centrée "pleine piste".

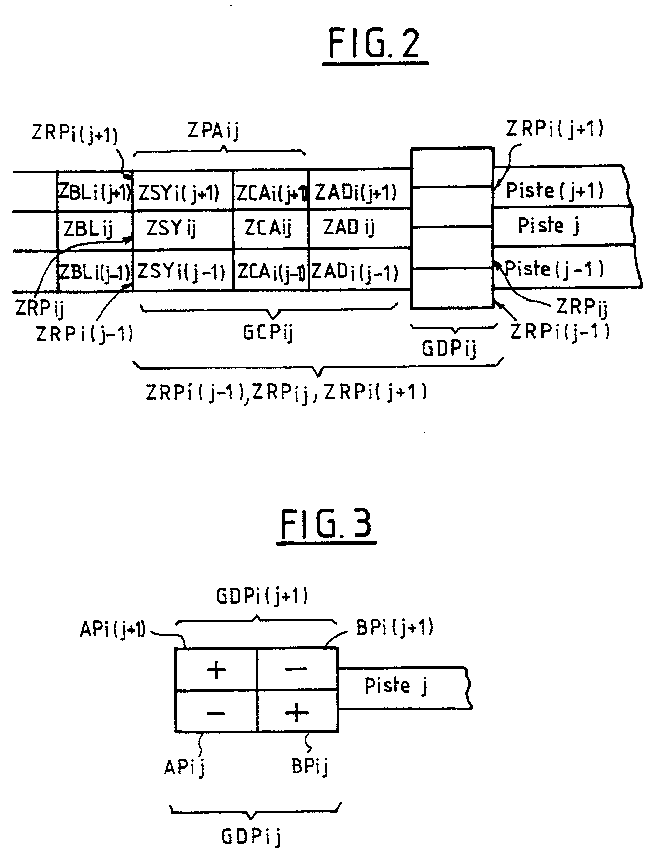

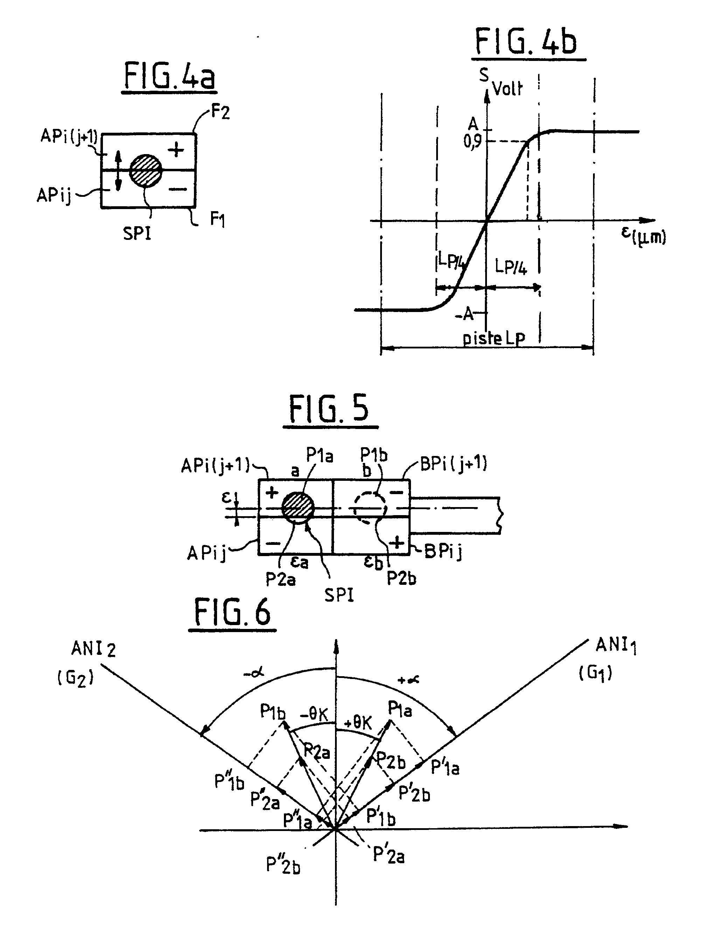

● une seconde partie également appelée second groupe d'informations, à savoir $GDP_{ij}$ dont le milieu coïncide avec la frontière entre deux pistes de données voisines. On dit également que cette seconde partie $GDP_{ij}$ est décentrée par rapport aux pistes de données de numéro d'ordre j. Chaque seconde partie $GDP_{ij}$ est décentrée d'une largeur égale à celle d'une demi-piste par rapport aux pistes de numéro d'ordre j, ce qui signifie que la frontière entre deux secondes parties $GDP_{ij}$, et $GDP_{i(j+1)}$, ou entre $GDP_{ij}$ et $GDP_{i(j-1)}$ est confondue respectivement avec le milieu de la piste j et le milieu de la piste (j – 1). On comprendra mieux les raisons de la division de chaque zone de référence en deux parties $GCP_{ij}$ et $GDP_{ij}$ dont l'une est centrée pleine piste, et l'autre est décentrée par rapport à la piste, en se référant à la description qui sera faite plus loin, en référence aux figures 3 et 4.

De préférence, la première partie $GCP_{ij}$ précède la seconde $GDP_{ij}$.

La première partie $GCP_{ij}$ comprend respectivement :

1. Un groupe d'informations de préambule $ZPA_{ij}$ comprenant :

a) un sous-groupe $ZSY_{ij}$ comprenant des informations de synchronisation permettant de répérer avec précision le début de la zone de référence $ZRP_{ij}$,

b) un sous-groupe d'informations $ZCA_{ij}$ dont la lecture permet d'établir le gain des amplificateurs des circuits de lecture des informations contenues sur le disque DISC,

2. Un groupe d'informations d'adresse $ZAD_{ij}$. Comme dans les zones de référence $ZRP_{ij}$ selon l'art antérieur, l'adresse est une adresse absolue et est écrite en code Gray.

La première partie $GCP_{ij}$ est précédée de la zone de blanc $ZBL_{ij}$. De préférence, le sous-groupe $ZSY_{ij}$ précède le sous-groupe $ZCA_{ij}$ qui précède le groupe $ZAD_{ij}$.

On a pu établir au moyen de simulations effectuées sur ordinateur, que pour obtenir une bonne détection de la zone de référence $ZRP_{ij}$, le sous-groupe de synchronisation $ZSY_{ij}$ devait contenir une quinzaine de bits. Le sous-groupe d'informations $ZCA_{ij}$ contient par exemple six couples de bits égaux à 1 et 0, soit une suite de six couples constitués par un domaine magnétique d'aimantation positive suivi d'un domaine magnétique d'aimantation négative.

Quant au groupe d'informations d'adresses, il contient 16 bits, ce qui permet de dénombrer $2^{16}$ pistes (environ 65.000 pistes adressables).

Ainsi qu'on peut le voir à la figure 3, chaque seconde partie $GDP_{ij}$ de la zone de référence $ZRP_{ij}$ comprend simplement deux domaines magnétiques d'informations de position fine, à savoir un premier domaine $AP_{ij}$ dont l'aimantation a un premier sens, et un second domaine $BP_{ij}$ dont l'aimantation a un second sens opposé au premier. Pour la seconde partie de la zone de référence voisine, à savoir $GDP_{i(j+1)}$, les deux domaines d'informations de position fine, à savoir $AP_{i(j+1)}$ et $BP_{i(j+1)}$, ont des aimantations de sens opposés à celles des aimantations des domaines correspondants de la seconde partie voisine $GDP_{ij}$. Ainsi, si l'aimantation dans le domaine $AP_{ij}$ est négative, l'aimantation dans le domaine voisin $AP_{i(j+1)}$ est positive, alors que si l'aimantation est positive dans le domaine $BP_{ij}$, l'aimantation est négative dans le domaine $BP_{i(j+1)}$.

On voit donc que chaque seconde partie contenant les informations de position fine d'une zone de référence $ZRP_{ij}$, est de constitution extrêmement simple et ne comprend que deux domaines successifs d'aiman-

5

tation opposée.

Il est clair que les aimantations dans les secondes parties $GDP_{ij}$ où j est pair sont constituées de domaines $AP_{ij}$ et $BP_{ij}$ ayant des aimantations qui ont toutes le même sens, à savoir par exemple respectivement négative et positive, alors que les secondes parties $GDP_{i\,(j+1)}$ où j + 1 est impair, ont toutes des aimantations de même sens, à savoir respectivement positive et négative pour les domaines $AP_{i\,(j+1)}$ et $BP_{i\,(j+1)}$.

On considère la figure 4.

A la figure 4a, on a représenté l'image du spot lumineux SPI produit par le senseur optique de lecture, de forme sensiblement circulaire, dont le diamètre est de l'ordre du micromètre. Ce spot lumineux SPI est représenté à cheval sur les deux domaines d'informations de position fine $AP_{ij}$ et $AP_{i\,(j+1)}$.

Si l'on déplace ce spot lumineux SPI en regard des deux domaines précédemment mentionnés, depuis la frontière $F_1$ du premier $AP_{ij}$ jusqu'à la frontière $F_2$ du second $AP_{i\,(j+1)}$, où $F_1$ est la frontière entre le domaine $AP_{ij}$ et le domaine $AP_{i\,(j-1)}$ et $F_2$ est la frontière entre le domaine $AP_{i\,(j+1)}$ et le domaine $AP_{i\,(j+2)}$, l'évolution du signal délivré par les circuits de lecture associés aux dispositifs optiques de lecture (pour ceux-ci, se référer par exemple au brevet français 2514913 précité) est représentée par la courbe de la figure 4b. Entre la frontière $F_1$ et la frontière $F_2$, l'évolution du signal passe d'abord par un palier où l'amplitude est égale à – A (on suppose que le signal est négatif lorsque le spot lumineux est disposé en regard d'un domaine magnétique d'aimantation négative et positif lorsque le spot lumineux est disposé en regard d'un domaine magnétique d'aimantation positive) puis croît de manière sensiblement linéaire depuis la valeur – A jusqu'à une valeur + A en passant par une valeur nulle lorsque le spot lumineux SPI est parfaitement à cheval sur les deux domaines $AP_{ij}$ et $AP_{i\,(j+1)}$, puis évolue de nouveau suivant un palier, cette fois d'amplitude + A lorsque le spot lumineux se rapproche de la frontière $F_2$.

Si l'on ne considère l'évolution du signal délivré S que sur une plage de largeur égale à la largeur $L_p$ d'une piste, plage ayant pour milieu la frontière entre les deux domaines $AP_{ij}$ et $AP_{i\,(j+1)}$, c'est-à-dire le milieu de la piste de numéro d'ordre j, on voit que la plage où le signal S est une fonction linéaire de la position occupée par le spot SPI a une largeur légèrement inférieure à $2 \times L_{p/4}$ soit légèrement inférieure à $L_{p/2}$. (Si $L_p = 3$ micromètres, cette plage de linéarité est comprise entre 1 et 1,5 micromètre).

Cela a les conséquences suivantes :

1) On sort très vite de la zone linéaire lorsque l'on cherche à asservir le dispositif de lecture en position fine (c'est-à-dire, lorsque le dispositif de lecture effectue des opérations de lecture des données contenues sur une piste de numéro d'ordre j, ce qui implique que le spot lumineux SPI est parfaitement centré sur cette piste),

2) On est certain d'avoir une lecture correcte de l'adresse si le spot lumineux SPI reste dans cette zone de linéarité.

Pour effectuer la lecture des informations de position fine, on utilise le circuit DLFI, fonctionnant de manière analogue au circuit optoélectronique de lecture décrit dans le brevet 2514 913, mais utilisant en plus un mode de lecture différentiel comme il sera décrit ci-dessous :

Le circuit DLFI comprend :

— la source de lumière polarisée (de préférence monochromatique) SLI émettant un faisceau de lumière incident $F_i$.

— l'élément séparateur $ESI_1$,

— le miroir MI,

— le dispositif de focalisation DFOCI du faisceau lumineux $F_i$ sur le disque magnétooptique DISC, lequel est réfléchi par ce dernier et devient le faisceau Fr : la Trace du faisceau lumineux sur le disque DISC forme le spot lumineux SPI.

— le second élément séparateur $ESI_2$ qui reçoit le faisceau lumineux Fr réfléchi par le disque DISC après réflexion sur $ESI_1$ et le divise en deux faisceaux F'r et F''r de puissance lumineuse égale.

— des premiers moyens $MDI_1$ de détection de l'angle de rotation par effet Kerr du faisceau réfléchi F'r comprenant :

— un premier analyseur de lumière $ANI_1$, auquel est associé le circuit de lecture $CLI_1$,

— des seconds moyens $MDI_2$ de détection de l'angle de rotation par effet Kerr du faisceau réfléchi F''r comprenant :

— un second analyseur $ANI_2$ auquel est associé le circuit de lecture $CLI_2$,

— des moyens de détermination de la position MDPI du spot lumineux par rapport aux deux secondes parties de deux zones de référence voisines comprennent, par exemple, l'intégrateur SOMI associé au multiplicateur MULTI.

L'élément analyseur $ANI_1$ a une direction priviligiée de propagation de la lumière faisant un angle $+ \alpha$ avec le vecteur champ électrique $E_i$ du faisceau de lumière incident $F_i$ envoyé sur la surface du disque DISC.

L'analyseur $ANI_2$ a une direction privilégiée de propagation de la lumière qui fait un angle $- \alpha$ avec le vec-

EP 0 295 979 B1

teur $E_l$.

Les deux circuits de lecture $CLI_1$ et $CLI_2$ sont identiques et comprennent de manière connue des transducteurs photoélectroniques disposés à la sortie des deux analyseurs $ANI_1$ et $ANI_2$ et recevant la lumière transmise par ceux-ci et des amplificateurs qui reçoivent les signaux de sortie de ces transducteurs photoélectroniques (pour simplifier le schéma, on n'a représenté ni ces transducteurs photoélectroniques ni les amplificateurs associés).

Les éléments SLI, $ESI_1$, MI, DFOCI sont connus. Ils sont par exemple décrits ainsi que leur fonctionnement dans le brevet 2514913 précité.

Le signal $\varepsilon$ délivré par le dispositif de lecture d'informations de position fine DLFI, est le signal de position fine appelé également signal d'erreur de position fine.

La manière dont est obtenu ce signal $\varepsilon$ est décrite ci-après, notamment en référence avec les figures 5 et 6, le spot lumineux SPI étant supposé être en regard successivement des deux premiers domaines $AP_{ij} - AP_{i\,(j+1)}$ et des deux seconds domaines $BP_{ij} - BP_{i\,(j+1)}$.

La source de lumière SLI envoie un faisceau lumineux $F_l$ sur le disque DISC par l'intermédiaire de l'élément séparateur $ESI_1$, du miroir MI et du dispositif de focalisation DFOCI. Le faisceau Fr réfléchi par le disque DISC, dont le vecteur champ électrique Fr a subi une rotation $\pm \theta_k$ par effet Kerr (voir brevet 2514913) par rapport au vecteur champ électrique $E_l$ est envoyé à travers le dispositif de focalisation DFOCI, et les éléments séparateurs $ESI_1$ et $ESI_2$ respectivement sur les analyseurs $ANI_1$ et $ANI_2$. La moitié de la puissance lumineuse du faisceau réfléchi $F_r$ est envoyée sous forme de faisceau F'r sur l'analyseur $ANI_1$ et l'autre moitié sous forme du faisceau F"r sur l'analyseur $ANI_2$. La puissance lumineuse recueillie par l'analyseur $ANI_1$ est transformée par le circuit de lecture $CLI_1$ en un signal $\varepsilon_{a1}$ ou $\varepsilon_{b1}$ suivant que le spot SPI est disposé en regard simultanément des deux premiers domaines d'informations de position fine $AP_{ij}$ et $AP_{i(j+1)}$ ou des deux seconds domaines $B_{ij} - BP_{i(j+1)}$.

De la même manière, la puissance lumineuse recueillie par l'analyseur $ANI_2$ est transformée à la sortie du circuit de lecture $CLI_2$ en un signal $\varepsilon_{a2}$ ou $\varepsilon_{b2}$.

Les signaux $\varepsilon_{a1}$ (ou $\varepsilon_{b1}$) et $\varepsilon_{a2}$ (ou $\varepsilon_{b2}$) sont envoyés à l'élément intégrateur SOMI qui délivre soit le signal $\overline{\varepsilon}_a$ soit le signal $\overline{\varepsilon}_b$ et fonctionne également comme un amplificateur différentiel, c'est-à-dire $\overline{\varepsilon}_a = \overline{\varepsilon}_{a1} - \overline{\varepsilon}_{a2}$ et $\overline{\varepsilon}_b = \overline{\varepsilon}_{b1} - \overline{\varepsilon}_{b2}$.

Ce signal est envoyé au multiplicateur MULTI qui l'affecte d'un signe + lorsqu'il s'agit de $\overline{\varepsilon}_a$ ou d'un signe − s'il s'agit de $\overline{\varepsilon}_b$. En effet, du fait que le signe des aimantations dans les domaines $AP_{ij}$ et $BP_{ij}$ sont opposés, il convient de multiplier par − 1 le signal obtenu $\overline{\varepsilon}_b$ lorque le spot lumineux SPI se situe en regard des seconds domaines $BP_{ij} - BP_{i\,(j+1)}$, afin que le signal d'erreurs $\varepsilon$ ait le même signe que le spot lumineux SPI soit en regard des deux premiers domaines ($AP_{ij}$ ou $AP_{i\,(j+1)}$) ou en regard des deux seconds domaines ($BP_{ij} - BP_{i\,(j+1)}$).

L'intégrateur SOMI effectue l'intégration et calcule la valeur moyenne des signaux $\overline{\varepsilon}_{a1}$, ou $\varepsilon_{a2}$ ($\varepsilon_{b1}$ ou $\varepsilon_{b2}$) et calcule leur différence $\overline{\varepsilon}_{a1} - \overline{\varepsilon}_{a2}$ ($\overline{\varepsilon}_{b1} - \overline{\varepsilon}_{b2}$) pour une durée d'intégration $t_l$ légèrement inférieure à la moitié de la durée de lecture de chacun des domaines $AP_{ij}$ ou $BP_{ij}$, cette durée de lecture étant la même pour le premier et le second domaine et étant égale au temps de défilement de l'un de ceux-ci devant le spot lumineux SPI, l'intégration ayant lieu lorsque le spot lumineux est situé en regard de la partie centrale de chacun des premiers et seconds domaines.

On considère la figure 5 et on suppose que le spot lumineux SPI n'est pas parfaitement centré sur les deux domaines voisins $AP_{ij}$ et $AP_{i(j+1)}$ ou $BP_{ij}$ et $BP_{i(j+1)}$. Il en résulte un signal d'erreurs $\varepsilon$ non nul. Ce spot lumineux SPI est disposé en partie en regard du premier domaine $AP_{i(j+1)}$, ce qui est représenté par une zone hachurée à la figure 5. La puissance lumineuse correspondante est égale à $P_{1a}$. Une partie du spot lumineux SPI est disposée en regard du premier domaine $AP_{ij}$. La puissance lumineuse correspondante est $P_{2a}$. De même lorsque le spot lumineux SPI est disposé en regard des seconds domaines, les puissances lumineuses correspondant aux parties du spot qui se trouvent respectivement en regard de $BP_{i(j+1)}$ et $BP_{ij}$ sont respectivent $P_{1b}$ et $P_{2b}$.

On considère la figure 6.

Pour la partie du spot lumineux SPI située en regard d'un domaine d'aimantation positive (ce qui correspond à $P_{1a}$, $P_{2b}$) le vecteur champ électrique du faisceau Fr subit une rotation par effet Kerr + $\theta_k$ alors que pour la partie du spot SPI qui se trouve en regard des domaines d'aimantation négative, (ce qui correspond à $P_{2a}$ et $P_{1b}$), le vecteur champ électrique du faisceau Fr subit une rotation par effet Kerr égale à − $\theta_k$. On considère les projections de chacun des vecteurs champ électrique (auxquelles on a affecté les puissances lumineuses $P_{1a}$, $P_{2a}$, $P_{1b}$, $P_{2b}$), sur les directions privilégiées de propagation de la lumière des analyseurs $ANI_1$ et $ANI_2$.

On obtient, respectivement, d'une part :

$P'_{1a}$, $P'_{2b}$, $P'_{1b}$, $P'_{2a}$, .

7

et d'autre part :

$P''_{1b}, P''_{2a}, P''_{1a}, P''_{2b}.$

Si $G_1$ et $G_2$ sont respectivement les gains des amplificateurs des circuits $CLI_1$ et $CLI_2$ (où $G_1$ et $G_2$ sont exprimés par exemple en volts par watts), on peut écrire successivement les équations (1) à (7) suivantes :

$$\varepsilon_{a1} = (P'_{1a} - P'_{2a})\, G_1 \text{ et } \varepsilon_{b1} = (P'_{2b} - P'_{1b})\, G_1 \quad (1)$$

$$\varepsilon_{a2} = (P''_{2a} - P''_{1a})\, G_2 \text{ et } \varepsilon_{b2} = (P''_{1b} - P''_{2b})\, G_2 \quad (2)$$

$$\begin{cases} \overline{\varepsilon}_a = \overline{\varepsilon}_{a1} - \overline{\varepsilon}_{a2} = (P'_{1a} - P'_{2a})\, G_1 - (P''_{2a} - P''_{1a})\, G_2 \quad (3) \\[2em] \overline{\varepsilon}_b = \overline{\varepsilon}_{b1} - \overline{\varepsilon}_{b2} = (P'_{2b} - P'_{1b})\, G_1 - (P''_{1b} - P''_{2b})\, G_2 \quad (4) \end{cases}$$

où $\overline{\varepsilon}_{a1}, \overline{\varepsilon}_{a2}, \overline{\varepsilon}_{b1}, \overline{\varepsilon}_{b2}, \overline{\varepsilon}_a, \overline{\varepsilon}_b$ sont les valeurs moyennes de $\varepsilon_{a1}, \varepsilon_{a2}, \varepsilon_{b1}, \varepsilon_{b2}, \varepsilon_a, \varepsilon_b,$ calculées sur le temps d'intégration ti.

Par ailleurs, l'on a :

$$P'_{2b} = P''_{2a} \; ; \; P'_{1b} = P''_{1a} \; ; \; P''_{1b} = P'_{1a} \; ; \; P''_{2b} = P'_{2b} \quad (5)$$

d'où :

$$\overline{\varepsilon}_b = (P''_{2a} - P''_{1a})\, G_1 - (P'_{1a} - P'_{2a})\, G_2 \quad (6)$$

et

$$\overline{\varepsilon} = \overline{\varepsilon}_a - \overline{\varepsilon}_b = (P'_{1a} - P'_{2a}) - (P''_{2a} - P''_{1a})\, (G_1 + G_2) \quad (7)$$

$\overline{\varepsilon}$ étant la valeur moyenne de $\varepsilon$ calculée sur le temps d'intégration ti.

On voit que l'on obtient une expression de $\overline{\varepsilon}$ proportionnelle à la somme ($G_1 + G_2$).

La comparaison entre les équation (3) et (4) et (7) permet de mesurer les avantages que procure le mode d'écriture d'informations de position fine selon l'invention où chaque groupe $GDP_{ij}$ comprend deux domaines d'aimantation opposée $AP_{ij}$ et $BP_{ij}$.

En effet, si le groupe $GDP_{ij}$ n'est composé que d'un seul domaine, on a :

$$\overline{\varepsilon} = \overline{\varepsilon}_a \text{ ou } \overline{\varepsilon} = \overline{\varepsilon}_b \quad \text{(équation (3))}$$

Par suite, dans ce cas, le spot SPI étant supposé parfaitement centré sur une piste (à cheval sur $AP_{ij}$ et $AP_{i(j+1)}$), avec $P'_{1a} - P'_{2a} = P''_{2a} - P''_{1a}$ si $G_1 = G_2$ (ce qui dans la pratique est fréquent) on a $\overline{\varepsilon}_a \neq 0$, ce qui n'est pas souhaitable, puisqu'à un centrage parfait du spot, ne correspond pas un signal nul. On dit alors qu'il y a introduction d'un "offset".

Par contre, en considérant l'équation (7), on voit :

1) que $\overline{\varepsilon}$ est indépendant d'une quelconque différence entre $G_1$ et $G_2$,

2) que $\overline{\varepsilon}$ est = 0 si le spot est parfaitement centré sur une piste. Il n'y a donc pas d'introduction d'offset, quelles que soient les différences entre $G_1$ et $G_2$.

On peut dire que l'on effectue une double détection différentielle, d'une part, parce que le dispositif de lecture $DLFI_1$ comprend deux voies différentielles à savoir, la voie formée par $ANI_1$ et $CLI_1$ (moyens $MDI_1$) et la voie formée par $ANI_2$ et $CLI_2$ (moyens $MDI_2$), et d'autre part parce que chaque groupe d'informations de position fine $GDP_{ij}$ comprend deux domaines d'aimantation opposée $AP_{ij}$ et $BP_{ij}$.

Ce système permet une détection précise des informations de position fine et n'introduit pas d'offset et minimise le signal de bruit (par l'utilisation de l'intégrateur SOMI fonctionnant en amplificateur différentiel).

## Revendications

1. Mode d'écriture sur un support d'enregistrement magnétique (DISC) où les informations sont écrites en code binaire et réparties sur une pluralité N de pistes, chaque piste étant associée à au moins une zone de référence (ZRP$_{ij}$) qui comprend au moins un groupe d'informations de préambule (ZSY$_{ij}$ + ZCA$_{ij}$), un groupe d'informations d'adresse absolue (ZAD$_{ij}$) et un groupe d'informations de position fine (GDP$_{ij}$), la zone de référence (ZRP$_{ij}$) comprenant une première partie (GCP$_{ij}$) constituée des informations de préambule et des informations d'adresse absolue, et une seconde partie (GDP$_{ij}$) constituée des informations de position fine, la première partie étant disposée et centrée sur la piste de numéro d'ordre j, alors que la seconde partie est décalée par rapport au milieu de cette même piste, de telle sorte que la frontière entre deux secondes parties appartenant à deux zones de référence voisines est confondue avec le milieu de la piste de numéro d'ordre j, caractérisé en ce que la seconde partie est composée d'un premier et d'un second domaines magnétiques consécutifs ayant chacun une aimantation uniforme et opposée de celle de l'autre (AP$_{ij}$, BP$_{ij}$), les premiers et seconds domaines magnétiques correspondants de deux secondes parties appartenant à deux zones de référence voisines (AP$_{ij}$, AP$_{i\,(j+1)}$), étant également d'aimantation opposée.

2. Mode d'écriture selon la revendication 1 caractérisée en ce que le groupe d'informations de préambule comprend un premier sous-groupe (ZSY$_{ij}$) d'informations de synchronisation, précédant un second sous-groupe de contrôle automatique de gain (ZCA$_{ij}$), lequel précède le groupe d'informations d'adresse.

3. Mode d'écriture suivant la revendication caractérisée en ce que la première partie précède la seconde partie.

4. Dispositif de lecture opto-électronique des informations de position fine (GDP$_{ij}$) écrites selon le mode d'écriture de la revendication 2, caractérisé en ce qu'il comprend :
— une source de lumière (SLI) émettant un seul faisceau de lumière polarisée F$_i$ sur la surface du support en un endroit déterminé de celui-ci dont l'interaction avec l'état magnétique du support en cet endroit produit une rotation du plan de polarisation de la lumière.
— des moyens optiques (DFOCI) pour focaliser le faisceau (F$_i$) sur la surface du support, dont la trace sur celui-ci forme un spot lumineux (SPI) et qui est réfléchi par le disque en devenant le faisceau Fr, lequel est transmis par ceux-ci à :
— des moyens (ESI$_2$) qui le séparent en deux faisceaux F'r et F''r.
— des premiers moyens (MDI$_1$) de détection de l'angle de rotation du plan de polarisation de la lumière comprenant un premier analyseur de lumière (ANI$_1$) dont la direction privilégiée de propagation de la lumière fait un angle + $\alpha$ avec le vecteur champ électrique E$_i$ du faisceau incident F$_i$, qui recoivent le faisceau Fr, et délivrent un premier signal ($\varepsilon_{a1}$, $\varepsilon_{b1}$) fonction de la position du spot lumineux SPI par rapport aux deux secondes parties (GDP$_{ij}$), GDP$_{i\,(j+1)}$ de deux zones de référence voisine (ZRP$_{ij}$, ZRP$_{i\,(j+1)}$,
— des seconds moyens (MDI$_2$) de détection de l'angle de rotation du plan de polarisation de la lumière comprenant un second analyseur (ANI$_2$) dont la direction privilégiée de propagation de la lumière fait un angle $-\alpha$ avec le vecteur champ électrique E$_i$, qui reçoivent le faisceau F''r et délivrent un second signal ($\varepsilon_{a2}$, $\varepsilon_{b2}$) fonction de la position du spot lumineux SPI par rapport aux deux secondes parties (GDP$_{ij}$, GDP$_{i\,(j+1)}$)) de deux zones de référence voisines (ZRP$_{ij}$, ZRP$_{i\,(j+1)}$).
— des moyens (MDPI) de délivrance d'un signal $\bar{\varepsilon}$ de position fine donnant la position du spot lumineux par rapport aux dites secondes parties, qui reçoivent les premier et second signaux.

5. Mémoire magnétooptique incluant un disque magnétooptique et le dispositif de lecture optoélectronique selon la revendication 5.

## Patentansprüche

1. Verfahren zum Schreiben auf einen magnetischen Datenträger (DISC), auf den die Informationen im Binärcode geschrieben werden und auf einer Mehrzahl N von Spuren verteilt sind, wobei jede Spur wenigstens einem Referenzbereich (ZRP$_{ij}$) zugeordnet ist, der wenigstens eine Gruppe von Kopfinformationen (ZSY$_{ij}$ + ZCA$_{ij}$), eine Gruppe von Absolutadressen-Informationen (ZAD$_{ij}$) und eine Gruppe von Endpositionsinformationen (GDP$_{ij}$) umfaßt, wobei der Referenzbereich (ZRP$_{ij}$) einen ersten Teil (GCP$_{ij}$), der von den Kopfinformationen und den Absolutadressen-Informationen gebildet wird, und einen zweiten Teil (GDP$_{ij}$), der von den Endpositionsinformationen gebildet wird, umfaßt, wobei der erste Teil auf der Spur der Ordnungszahl j angeordnet und zentriert ist, während der zweite Teil in bezug auf die Mitte dieser selben Spur verschoben ist, derart, daß die Grenze zwischen zwei zwei benachbarten Referenzbereichen zugehörigen zweiten Teilen mit der Mitte der Spur der Ordnungszahl j zur Deckung kommt, dadurch gekennzeichnet, daß der zweite Teil durch einen ersten und einen zweiten magnetischen Bereich, die aufeinander folgen und jeweils eine gleichmäßige und zu derjenigen des anderen entgegengesetzte Magnetisierung besitzen, zusammengesetzt wird, wobei der entsprechende erste magnetische Bereich und der entsprechende zweite magnetische Bereich von zwei zwei benachbarten Referenzbereichen ($AP_{ij}$, $AP_{i(j+1)}$) zugehörigen zweiten Teilen gleichermaßen entgegengesetzt magnetisiert sind.

2. Schreibverfahren gemäß Anspruch 1, dadurch gekennzeichnet, daß die Gruppe der Kopfinformationen eine erste Untergruppe ($ZSY_{ij}$) von Synchronisierungsinformationen umfaßt, die einer zweiten Untergruppe zur automatischen Verstärkungssteuerung ($ZCA_{ij}$) vorangeht, welche wiederum der Gruppe der Adresseninformationen vorangeht.

3. Schreibverfahren gemäß Anspruch 1, dadurch gekennzeichnet, daß der erste Teil dem zweiten Teil vorangeht.

4. Vorrichtung zum optoelektronischen Lesen von Endpositionsinformationen ($GDP_{ij}$), die gemäß dem Schreibverfahren des Anspruches 2 geschrieben werden, dadurch gekennzeichnet, daß sie umfaßt :
— eine Lichtquelle (SLI), die auf die Oberfläche des Trägers an einer bestimmten Stelle desselben einen einzelnen polarisierten Lichtstrahl $F_i$ aussendet, dessen Wechselwirkung mit dem magnetischen Zustand des Trägers an dieser Stelle eine Drehung der Polarisationsebene des Lichts hervorruft,
— optische Mittel (DFOCI) zum Fokussieren des Strahls ($F_i$) auf der Oberfläche des Trägers, wobei die Spur des Strahls auf der Oberfläche einen Leuchtfleck (SPI) bildet und wobei der Strahl von der Platte reflektiert wird und zum Strahl (Fr) wird, der durch diese optischen Mittel übertragen wird an :
— Mittel ($ESI_2$), die ihn in zwei Strahlen F'r und F''r aufspalten,
— erste Mittel ($MDI_1$) zum Erfassen des Drehwinkels der Polarisationsebene des Lichts, die einen ersten Lichtanalysator ($ANI_1$) umfassen, dessen bevorzugte Lichtausbreitungsrichtung mit dem Vektor des elektrischen Feldes $E_i$ des einfallenden Strahls $F_i$ einen Winkel $+ \alpha$ bildet, die den Strahl Fr empfangen und ein erstes Signal ($\varepsilon_{a1}$, $\varepsilon_{b1}$) ausgeben, das eine Funktion der Position des Leuchtflecks SPI in bezug auf zwei zweite Teile ($GDP_{ij}$, $GDP_{i(j+1)}$) zweier benachbarter Referenzbereiche ($ZRP_{ij}$, $ZRP_{i(j+1)}$) ist,
— zweite Mittel ($MDI_2$) zur Erfassung des Drehwinkels der Polarisationsebene des Lichts, mit einem zweiten Analysator ($ANI_2$), dessen bevorzugte Lichtausbreitungsrichtung mit dem Vektor des elektrischen Feldes Ei einen Winkel $- \alpha$ bildet, die den Strahl F'r empfangen und ein zweites Signal ($\varepsilon_{a2}$, $\varepsilon_{b2}$) ausgeben, das eine Funktion der Position des Leuchtflecks SPI in bezug auf zwei zweite Teile ($GDP_{ij}$, $GDP_{i(j+1)}$) zweier benachbarter Referenzbereiche ($ZRP_{ij}$, $ZRP_{i(j+1)}$) ist, und
— Mittel (MDPI) zum Ausgeben eines die Position des Leuchtflecks in bezug auf die zweiten Teile angebenden Endpositionssignals $\bar{\varepsilon}$, die das erste und das zweite Signal empfangen.

5. Magnetooptischer Speicher, der eine magnetooptische Platte und die Vorrichtung zum optoelektronischen Lesen gemäß Anspruch 4 enthält.

## Claims

1. A mode of writing on a magnetic recording carrier (DISC) where the data are written in binary code and distributed over a plurality N of tracks, each track being associated with at least one reference zone ($ZRP_{ij}$) which includes at least one group of preamble data ($ZSY_{ij} + ZCA_{ij}$), one group including absolute address data ($ZAD_{ij}$) and one group containing fine-position data ($GDP_{ij}$), the reference zone ($ZRP_{ij}$) including a first portion ($GCP_{ij}$) comprising preamble data and absolute address data, and a second portion ($GDP_{ij}$) comprising fine-position data, the first portion being disposed and centred on the track of serial number j, while the second portion is offset with respect to the middle of this same track, such that the boundary between two second portions belonging to two adjacent reference zones coincides with the middle of the track of serial number j, characterized in that the second portion comprises a first and a second consecutive magnetic domains each having a uniform magnetization opposite one another ($AP_{ij}$, $BP_{ij}$), the first and second corresponding magnetic domains of two second portions belonging to two adjacent reference zones ($AP_{ij}$, $AP_{i(j+1)}$), likewise being of opposite magnetization.

2. A mode of writing according to claim 1, characterized in that the group of preamble data includes a first subgroup ($ZSY_{ij}$) of synchronizing data, preceding a second subgroup ($ZCA_{ij}$) of automatic gain control, which precedes the group of address data.

3. A mode of writing according to claim 1, characterized in that the first portion precedes the second portion.

4. An optoelectronic device for reading fine-position data ($GDP_{ij}$) written according to the writing mode of claim 2, characterized that it includes :
— a light source (SLI) emitting a single beam of polarized light $F_i$ onto the surface of the carrier, with a predetermined region thereof, the interaction of which with the magnetic state of the carrier in this region produces a rotation of the plane of polarization of the light ;

— optical means (DFOCI) for focusing the beam ($F_l$) onto the surface of the carrier, the path of which on the surface forms a light spot (SPI) and which is reflected by the disk, becoming the reflected beam (Fr), which is transmitted by them to :

— means ($ESI_2$) which separate it into two reflected beams F'r and F"r ;

— first means ($MDI_1$)of detecting the angle of rotation of the plane of polarization of the light including a first light analyzer ($ANI_1$) the overriding direction of propagation of the light of which forms an angle $+ \alpha$ with the electrical field vector $E_l$ of the incident beam $F_l$, which means receive the reflected beam Fr, and deliver a first signal ($\bar{\varepsilon}_{a1}, \bar{\varepsilon}_{b1}$(as a function of the position of the light spot SPI with respect to the two second portions ($GDP_{lj}$, $GDP_{l(j+1)}$) of two adjacent reference zones ($ZRP_{lj}$, $ZRP_{l(j+1)}$) ;

— second means ($MDI_2$) of detecting the angle of rotation of the plane of polarization of the light including a second analyzer ($ANI_2$) the overriding direction of propagation of the light of which forms an angle $- \alpha$ with the electrical field vector $E_l$, which means receive the beam F"r and deliver a second signal ($\varepsilon_{a2}$, $\varepsilon_{b2}$) as a function of the position of the light spot SPI with respect to the two second portions ($GDP_{lj}$, $GDP_{l(j+1)}$) of two adjacent reference zones ($ZPR_{lj}$, $ZRP_{l(j+1)}$) ;

— means (MDPI) for furnishing a fine-position signal $\bar{\varepsilon}$ giving the position of the light spot with respect to said second portions, which means receive the first and second signals.

5. A magnetooptical memory including a magnetooptic disk and the optoelectronic reading device according to claim 4.

## FIG.1a

DISC

$d_2$

$d_1$

$S_{i+1}$

$S_i$

$S_{i-1}$

$S_0$

F

C

## FIG.1b

$SDO_i$

$ZB_{ij}$

Données

$S_i$

$SAD_i$

## FIG.1c

F

$DZ_{ij}$

$ZB_{ij}$

$PPA_{ij}$

$PAD_{ij}$

$PPOS_{ij}$

$Ax4$

$ZRP_{i4}$

TM

$Ax3$

| | |
|---|---|
| Données piste 3 | |
| secteur $S_i$ | |
| Données piste 2 | |
| secteur $S_i$ | |
| Données piste 1 | |
| secteur $S_i$ | |
| Données piste 0 | |
| secteur $S_i$ | |

$ZRP_{i3}$

$Ax2$

$ZRP_{i2}$

$Ax1$

$ZRP_{i1}$

$Ax0$

$ZRP_{i0}$

## FIG. 2

| | | ZPAij | | | | | |
|---|---|---|---|---|---|---|---|
| ZRPi(j+1) | | | | | | | ZRPi(j+1) |
| | ZBLi(j+1) | ZSYi(j+1) | ZCAi(j+1) | ZADi(j+1) | | Piste (j+1) | |
| | ZBLij | ZSYij | ZCAij | ZAD ij | | Piste j | |
| | ZBLi(j-1) | ZSYi(j-1) | ZCAi(j-1) | ZADi(j-1) | | Piste(j-1) | |

ZRPij

ZRPi(j-1)

GCPij

GDPij

ZRPij

ZRPi(j-1)

ZRPi(j-1),ZRPij,ZRPi(j+1)

## FIG. 3

GDPi(j+1)

APi(j+1)                    BPi(j+1)

| + | − |
|---|---|
| − | + |

Piste j

APij          BPij

GDPij

## FIG.4a

## FIG.4b

## FIG.5

## FIG.6

## FIG.7